# EUROPEAN PATENT SPECIFICATION

(11) **EP 0 628 391 B1**
(45) Date of publication and mention of the grant of the patent: **04.06.1997**
(21) Application number: 93921114.0
(22) Date of filing: 05.10.1993
(51) Int. Cl.: B29B 15/08, B29B 15/12, B29K 105/08

(54) **PROCESS FOR PREPARING A FIBER-REINFORCED THERMOPLASTIC RESIN STRUCTURE**
HERSTELLUNGSVERFAHREN FÜR EINE FASERVERSTÄRKTE THERMOPLASTISCHE KUNSTSTOFF-STRUKTUR
PROCEDE DE PRODUCTION D'UNE STRUCTURE DE RESINE THERMOPLASTIQUE RENFORCEE PAR DES FIBRES

(30) Priority: 05.10.1992 JP 266165/92
(43) Date of publication of application: 14.12.1994
(73) Proprietor: POLYPLASTICS CO. LTD., Chuo-Ku Osaka-shi Osaka 541 (JP)
(72) Inventor: FUJII, Yasuhisa 885-11, Miyajima, Shizuoka 416 (JP); SERIZAWA, Hajime 21-4, Sankeidai, Shizuoka 411 (JP)
(74) Representative: Jackson, Peter
(86) International application number: JP9301427
(87) International publication number: WO9407668

(56) References cited:
- JP-A- 1 075 230
- JP-A- 2 026 733
- JP-A- 2 251 651
- JP-A- 4 039 334
- US-A- 3 993 726
- US-A- 4 588 538

## Description

### Field of the Art

The present invention relates to a process for preparing a fiber-reinforced thermoplastic resin structure according to the precharacterising part of claim 1.

### Description of Related Art

A process of the above type is known from e.g. US-A-4 588 538.

It is known to incorporate reinforcement fibers such as glass fibers into a thermoplastic resin in order to improve the strength and rigidity of the resin. Usually a fiber-reinforced thermoplastic resin is produced by blending a thermoplastic resin with short fibers such as a chopped strand and extruding the blend on an extruder. However, the improvement in the mechanical strength is naturally limited, since the fibers used are short and, in such a short fiber-reinforced resin, the breakage of the fibers is unavoidable during the kneading in the extruder. It is thus impossible to satisfy the requirement of a further improvement in the mechanical strength.

Recently, pultrusion has attracted attention as a process for producing a long fiber-reinforced thermoplastic resin without breaking the fibers by overcoming the above-described defect (see the specifications of U.S. Patent Nos. 2877501, 4439387 and 3022210, and the Official Gazette of Japanese Patent Publication-A No. 181852/1982).

A further process for preparing a fiber-reinforced thermoplastic structure is disclosed in US-A-3 993 726.

In pultrusion, an assembly of fiber bundles (a rove of fiber bundles), which is prepared by treating a lot of single-fibers from a bushing with an aqueous solution or aqueous emulsion of a sizing agent, bundling them, rolling them round a reel to form a cylindrical roll and drying the roll, are usually used as the reinforcing fibers. However, since the single-fibers in the fiber bundles are bound by means of the binder, the impregnation of the fiber bundles is started before they have been sufficiently opened. As a result, the impregnation efficiency becomes low and impregnation is occasionally insufficient thus impairing the surface appearance and mechanical properties.

### Disclosure of the Invention

### Summary of the Invention

After extensive investigations made for the purpose of solving the above-described problem, the present inventors have found that the impregnation efficiency of the fiber bundle can be remarkably increased by opening the sized fiber bundle prior to the impregnation. The present invention has been completed on the basis of this finding.

Namely, the present invention relates to a process for preparing a fiber-reinforced thermoplastic resin structure in which a continuous bundle of reinforcing fibers is impregnated with a molten thermoplastic resin while drawing the fiber bundle characterized in that a continuous bundle of reinforcing fibers is treated with a surface treatment agent and is then opened by needle punching whereafter the bundle is impregnated with the molten thermoplastic resin while drawing the fiber bundle to form a fiber-reinforced thermoplastic resin structure containing 5 to 80% by weight (based on the whole structure) of reinforcement fibers in a state arranged substantially in parallel.

A particular embodiment of the invention is subject of the dependent claim 2.

### Detailed Description of the Invention

The variety of the thermoplastic resins used as the base of the fiber-reinforced thermoplastic resin structure is not particularly limited in the present invention. The thermoplastic resins usable herein include, for example, polyethylene; polypropylene; polyesters such as polyethylene terephthalate and polybutylene terephthalate; polyamides such as nylon 6, nylon 66, nylon 11, nylon 12, nylon 610 and nylon 612; polyacetals; polycarbonates; thermoplastic polyurethanes, polyphenylene oxides; polyphenylene sulfides; polysulfones; polyether ketones; polyether amides; and polyether imides.

The varieties of the reinforcement fibers to be used in the present invention are not particularly limited. They may be fibers each having a high melting point (a high softening point), such as glass fibers, carbon fibers, metal fibers and aromatic polyamide fibers. When the glass fibers are used, fiber bundles thereof having a fiber diameter of 6 to 25 µm and a weight for 1000 m thereof of 500 to 4400 g are usually used. These fibers may be those treated with a known surface treating agent such as a sizing agent.

The reinforcing fiber bundle to be used in the present invention may be prepared by treating a lot of single-fibers from a bushing with an aqueous solution or aqueous emulsion of a sizing agent and then bundling them. In particular, the reinforcing fiber bundle is, for example, a rove of fiber bundles thus bundled and rolled round a reel to form a cylindrical roll (so-called package of direct roving), or a rove of fiber bundles thus rolled into a shape substantially free from an end and then dried (so-called cake rove).

Since the single-fibers in the fiber bundle are bundled, they are occasionally insufficiently opened due to a surface treatment agent such as a sizing agent before the fiber bundle is moved into the impregnation step. In such a case, the impregnation efficiency is low and the impregnation is occasionally so unsatisfactory as to impair the surface appearance and mechanical properties. Although it is possible to use a fiber bundle having a low degree of bundling of the single-fibers prepared by using a reduced amount of the surface treatment agent for solving this problem, transportation of such a fiber bundle is difficult and a considerably wide storing space is necessitated.

An object of the present invention is to solve the above-described problem. The present invention provides the opening of the surface treated fiber bundle by needle punching prior to the impregnation.

For the needle punching, a known apparatus is usable as it is. Preferably, the needle density, shape of the needles and depth of the needle punching are changed depending on the variety of the fiber bundle and the degree of the bundling.

The amount of the reinforcement fibers is 5 to 80% by weight in the present invention. When the amount of the reinforcement fibers is below 5% by weight, no sufficient reinforcing effect can be obtained and, on the contrary, when it exceeds 80% by weight, the preparation of the reinforced structure and the molding thereof become very difficult. A preferred amount of the reinforcement fibers is 10 to 75% by weight and particularly 20 to 70% by weight.

Although the die to be used in pultrusion in the preparation of the fiber-reinforced thermoplastic resin structure of the present invention is not particularly limited, preferred is an impregnation die, particularly crosshead die from the viewpoint of operating characteristics. The impregnation method for the resin is not particularly limited and any of known methods such as a method of passing through a bent passage or a roller method can be employed.

In the fiber-reinforced thermoplastic resin structure of the present invention prepared as described above, the reinforcement fibers are substantially continuous over the whole length of the structure and arranged substantially in parallel with each other. By passing the structure through a shaping die, the structure can be shaped into a desired shape such as a strand, pellets, a tape or a sheet and taken off with take-off rolls.

The process of the present invention can be employed also for the preparation of a fiber-reinforced thermoplastic resin structure which further contains substances usually added to resins depending on the purpose and use, such as stabilizers, e.g. antioxidants, thermal stabilizers and ultraviolet absorbers; antistatic agents; lubricants: plasticizers; releasing agents; flame retardants; flame-retarding assistants; crystallization accelerators; colorants, e.g. dyes and pigments; and powdery, granular or platy inorganic and organic fillers.

It will be apparent from the above description that a fiber-reinforced thermoplastic resin structure exhibiting an extremely good surface appearance and excellent mechanical properties in the course of the molding can be efficiently produced by the process of the present invention wherein the reinforcing fiber bundle is opened by a mechanical impact and then impregnated with a molten thermoplastic resin in the preparation of the fiber-reinforced thermoplastic resin structure.

### Example

The following Example will further illustrate the present invention.

### Example 1 and Comparative Example 1

A wet glass fiber bundle, prepared by treating fibers with an emulsion containing a sizing agent and bundling them, was rolled by the direct rolling method and then dried to obtain a rove of the glass fiber bundles. The glass fiber bundle taken from the rove was impregnated with molten polypropylene while it was drawn through a crosshead die, then shaped and cut to obtain a pelletlike fiber-reinforced thermoplastic resin structure having a glass fiber content of 50% by weight (Comparative Example 1).

Another pelletlike fiber-reinforced thermoplastic resin structure was prepared in the same manner as that described above except that the glass fiber bundle from the above-described rove of the glass fiber bundles was needle-punched to open the glass fiber bundle prior to passing it through the crosshead die and the fiber bundle was impregnated with polypropylene (Example 1). The degree of opening of the fiber bundle after needle punching was evaluated in terms of the width of the opening forged on the side of a cylinder by applying a tension of 3.92 N/cm² (400 gf/cm²) to the fiber bundle and drawing it at a rate of 1 m/min along the side surface of the cylinder having a diameter of 35 mm. The results are given in Table 1.

Test pieces for the determination of the properties and flat plates (100 mm x 100 mm x 8 mm) for the evaluation of the surface appearance were prepared by injection molding from the pelletlike fiber-reinforced thermoplastic resin structure obtained above to evaluate their surface appearance and mechanical properties. The surface appearance was evaluated by the relative evaluation method from the extent of the heterogeneous dispersion of the reinforcing fiber bundled on the surface of the molded article and the number thereof. The lower the marks, the more excellent the surface appearance. The results are given in Table 1.

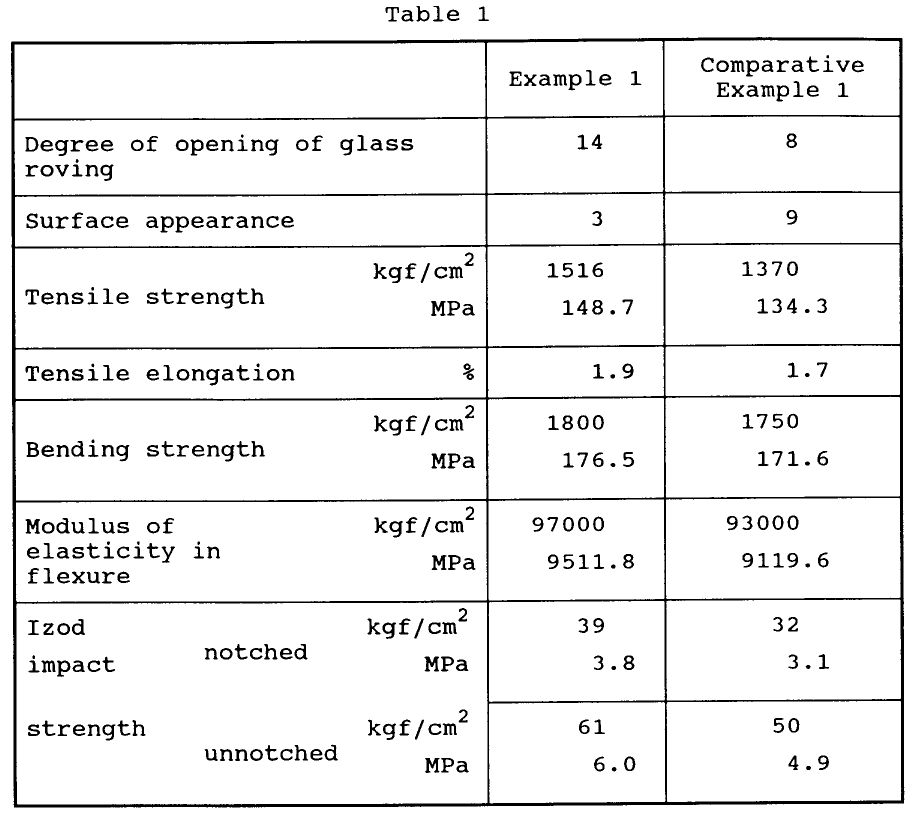

## Claims

1. A process for preparing a fiber-reinforced thermoplastic resin structure in which a continuous bundle of reinforcing fibers is impregnated with a molten thermoplastic resin while drawing the fiber bundle characterized in that a continuous bundle of reinforcing fibers is treated with a surface treatment agent and is then opened by needle punching whereafter the bundle is impregnated with the molten thermoplastic resin while drawing the fiber bundle to form a fiber-reinforced thermoplastic resin structure containing 5 to 80% by weight (based on the whole structure) of reinforcement fibers in a state arranged substantially in parallel.

2. A process for preparing a fiber-reinforced thermoplastic resin structure as set forth in claim 1, wherein the impregnation of the fiber bundle with a molten thermoplastic resin is conducted by the use of a crosshead die while drawing the fiber bundle.

## Patentansprüche

1. Verfahren zur Herstellung einer faserverstärkten thermoplastischen Harz-Struktur, in der ein kontinuierliches Bündel von Verstärkungsfasern mit einem geschmolzenen thermoplastischen Harz imprägniert wird, während das Faserbündel verstreckt wird, dadurch gekennzeichnet, daß ein kontinuierliches Bündel von Verstärkungsfasern mit einem Oberflächenbehandlungsmittel behandelt wird und dann durch Nadelstanzen geöffnet wird, wonach das Bündel mit dem geschmolzenen thermoplastischen Harz imprägniert wird während das Faserbündel verstreckt wird, um eine faserverstärkte thermoplastische Harz-Struktur zu bilden, die 5 bis 80 Gew.-% (bezogen auf die gesamte Struktur) Verstärkungsfasern in einem im wesentlichen parallel angeordneten Zustand enthält.

2. Verfahren zur Herstellung einer faserverstärkten thermoplastischen Harz-Struktur gemäß Anspruch 1, worin das Imprägnieren des Faserbündels mit einem geschmolzenen thermoplastischen Harz unter Verwendung einer Kreuzkopfdüse durchgeführt wird, während das Faserbündel verstreckt wird.

## Revendications

1. Un procédé pour la préparation d'une structure de résine thermoplastique renforcée par des fibres dans lequel un faisceau continu de fibres de renforcement est imprégné d'une résine thermoplastique fondue avec étirage concomitant du faisceau de fibres, caractérisé en ce qu'un faisceau continu de fibres de renforcement est traité par un agent de traitement de surface puis est ouvert par aiguilletage, ce après quoi le faisceau est imprégné de la résine thermoplastique fondue avec étirage simultané du faisceau de fibres pour former une structure de résine thermoplastique renforcée par des fibres qui renferme 5 à 80 % en poids (sur la base de l'ensemble de la structure) de fibres de renforcement dans un état d'orientation sensiblement parallèle.

2. Un procédé pour la préparation d'une structure de résine thermoplastique renforcée par des fibres selon la revendication 1, dans lequel l'imprégnation du faisceau de fibres par une résine thermoplastique est opérée par utilisation d'une filière à tête d'équerre avec étirage simultané du faisceau de fibres.
